# EUROPÄISCHE PATENTSCHRIFT

(11) **EP 0 402 309 B1**
(45) Veröffentlichungstag und Bekanntmachung des Hinweises auf die Patenterteilung: **08.12.1993**
(21) Anmeldenummer: 90810364.1
(22) Anmeldetag: 18.05.1990
(51) Int. Cl.: B29C 67/14, B29D 31/00

(54) **Profilstange aus kompaktem Verbundwerkstoff und Herstellungsverfahren**
Profiled rod made from compact composite and method for producing same
Profilé en matière composite compacte et son procédé de fabrication

(30) Priorität: 05.06.1989 CH 2096/89
(43) Veröffentlichungstag der Anmeldung: 12.12.1990
(73) Patentinhaber: SULZER INNOTEC AG, CH-8401 Winterthur (CH)
(72) Erfinder: Gysin, Hansjürg, CH-8400 Winterthur (CH)
(74) Vertreter: Hammer, Bruno, Dr.

(56) Entgegenhaltungen:
- EP-A- 0 100 138
- EP-A- 0 102 393
- EP-A- 0 291 023
- EP-A- 0 308 237
- WO-A-87/04916
- FR-A- 2 502 036
- GB-A- 1 305 198
- US-A- 2 558 855
- US-A- 2 602 766
- US-A- 3 124 032

## Beschreibung

Die Erfindung betrifft ein Profilstück gemäss dem Oberbegriff des Anspruches 1 sowie ein Verfahren zur Herstellung von Profilstangen für Profilstücke.

Aus der US-PS 2,558,855 ist ein Profilstück bekannt, das aus einer Profilstange aus kompaktem Verbundwerkstoff bestehend aus hochfesten technischen Endlosfasern in einer thermoplastischen Matrix hergestellt ist. Derartige Profilstücke sind jedoch entweder mechanisch noch relativ schwach oder sie sind sehr aufwendig und entsprechend teuer herzustellen. Sie sind auch nicht verformbar und werden nur für eine genau definierte, relativ eng berenzte Anwendung hergestellt. Vor allem Anschlüsse und Verbindungen mit solchen Profilen sind schwer und aufwendig herzustellen.

Der Erfindung liegt die Aufgabe zugrunde, Profilstücke aus Profilstangen zu schaffen, welche die vorstehend genannten Nachteile nicht aufweisen, welche auf einfache Art und mit möglichst geringem Festigkeitsverlust Verbindungen mit anderen Teilen ermöglichen, und welche eine hohe mechanische Festigkeit, speziell Torsions- und Schubfestigkeit, wie auch eine verschleissfeste Oberfläche aufweisen.

Diese Aufgabe wird erfindungsgemäss durch die kennzeichnenden Merkmale des Anspruches 1 gelöst. Die Vorteile der Erfindung sind darin zu sehen, dass die thermoplastische Matrix und der erfindungsgemässe Aufbau ermöglicht, die Profilstangen bzw. zugeschnittene Profilstücke auf verschiedenste Arten zu verformen, ohne dass deren Kompaktheit und die guten mechanischen Eigenschaften verloren gehen, beispielsweise zu biegen oder an den Enden flach zu drücken, dass Augen, z.B. für Verschraubungen oder die Aufnahme von Bolzen nachträglich thermoplastisch eingeformt werden können, ohne dass Material abgetragen werden muss, und damit ohne wesentliche Schwächung des Profils an der empfindlichen Verbindungsstelle und dass eine Verschweissung mit anderen Profilstücken oder mit kompatiblen Fremdteilen möglich ist.

Die Ansprüche 2 bis 17 betreffen besonders vorteilhafte Weiterbildungen. Danach können thermoplastische Polymere, wie PEEK, PPS, PES, PEI, PA, PP, PC oder PS als Matrix eingesetzt werden, welche einfach und ohne hohe Temperaturen verarbeitbar sind. Es können auch leichte, anorganische Matrixmaterialien wie Glas, Aluminium oder Titan eingesetzt werden. Als hochfeste und leichte Verstärkungsfasern können sich besonders gut Kohle, Aramid, Glas oder Borfasern eignen. Gute Kombinationen ergeben sich aus PEEK oder PPS mit mindestens 45 Volumen-Prozent an Kohle, Aramid oder Glasfasern. Mit einer Querschnittsfläche der Ummantelung, welche mindestens 15 % der Querschnittsfläche des UD-Kern beträgt, können sowohl hohe Zug- und Druckfestigkeiten als auch gute Torsions- und Schubfestigkeiten erreicht werden. Mit mehreren übereinanderliegenden, umhüllenden Mantelgeflechten können besonders torsionsfeste und auch biegefähige Profilstangen erzeugt werden. Durch unterschiedliche Faserwinkel in den einzelnen Ummantelungsschichten können die mechanischen Eigenschaften weiter angepasst und optimiert werden. Für dicke Profilstangen können zwischen den Mantelschichten auch weitere unidirektionale Gelege eingeschoben sein. Der unidirektionale Kern kann leicht tordiert sein zur Erleichterung eines Längenausgleichs bei Biegungen. Die Profilstangen können in Querschnitten verschiedenster Form für eine Grosszahl von Einsatzbereichen ausgebildet sein. Profilstücke werden aus der erfindungsgemässen Profilstange gebildet durch Umformung oder Biegung in mindestens einem Teilbereich. Dadurch kann auf einfache Art eine Vielzahl von hochfesten Bauelementen erzeugt werden wie Hebel, Verbindungsstangen oder Federn. Diese Profilstücke können Abflachungen, eingeformte Augen oder auch Verschweissungen mit anderen Teilen aufweisen.

Ein Verfahren zur Herstellung der erfindungsgemässen Profilstangen für Profilstücke ist dadurch gekennzeichnet, dass der unidirektionale Kern und die Ummantelungsgeflechte zuerst aufgeheizt und dann zusammen in einem Arbeitsgang in einer Pultrusionseinrichtung kontinuierlich gebildet werden, wobei sie unter Druck und teilweiser Abkühlung kompakt konsolidiert und in die vorgegebene Profilform gepresst werden, wobei Vorheizung, Vorschub, Zugkräfte, Abkühlrate, Formgebung und Umformstrecke in der Pultrusionseinrichtung so auf Matrix und Fasern abgestimmt werden, dass die Konsolidierung unter optimalem Druck erfolgt. Dieses Verfahren ist besonders einfach und effizient.

Im folgenden wird die Erfindung anhand von Ausführungsbeispielen im Zusammenhang mit den Zeichnungen näher erläutert. Dabei zeigt:
- Fig. 1: einen Querschnitt durch eine erfindungsgemässe Profilstange mit UD-Kern und Geflechtmantel.
- Fig. 2: eine teilweise geschnittene Ansicht einer Profilstange.
- Fig. 3: eine Querschnittverformung einer Profilstange.
- Fig. 4: eine Profilstange mit mehreren Mantelgeflechtschichten.
- Fig. 5: eine gebogene Profilstange mit zwei Mantelgeflechten und unterschiedlichen Faserwinkeln.
- Fig. 6: eine Profilstange mit mehreren Mantelgeflechten und UD-Gelegen.
- Fig. 7: verschiedene Beispiele von Querschnittformen.
- Fig. 8: ein umgeformtes und gebogenes Profilstück.
- Fig. 9: ein Profilstück mit eingeformtem Auge.
- Fig. 10: ein Profilstück in Federform, an eine Halterung angeschweisst.
- Fig. 11: ein Herstellverfahren für Profilstangen mit einer Pultrusionseinrichtung.
- Fig. 12: Temperatur- und Druckverlauf beim Herstellverfahren von Fig. 11.

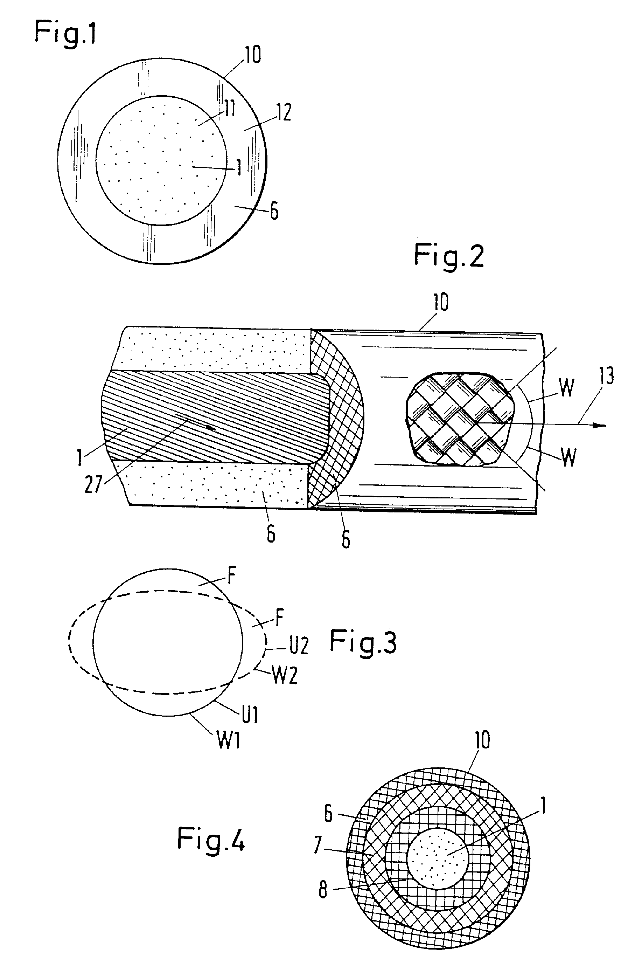

Fig. 1 zeigt im Schnitt eine erfindungsgemässe kompakte, leichte Profilstange 10 mit thermoplastischer Matrix, einem inneren Kern 1 mit unidirektionalen, hochfesten technischen Endlosfasern und einer umhüllenden äusseren Mantelschicht 6 aus einem geflochtenen Faserschlauch.

Vorzugsweise beträgt die Querschnittsfläche 12 der Mantelschicht mindestens 15 % jener (11) des UD-Kerns. Der Geflechtmantel 6 ergibt dabei auch einen starken Zusammenhalt des UD-Kerns und gute Verschleisseigenschaften, da an der Oberfläche keine einzelnen Fasern aufspriessen können.

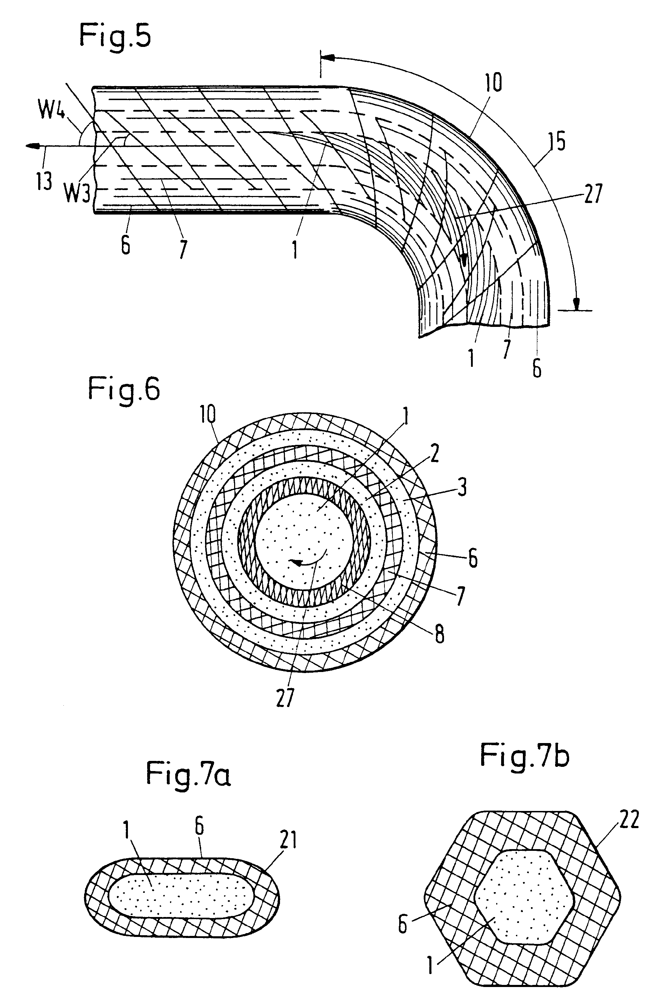

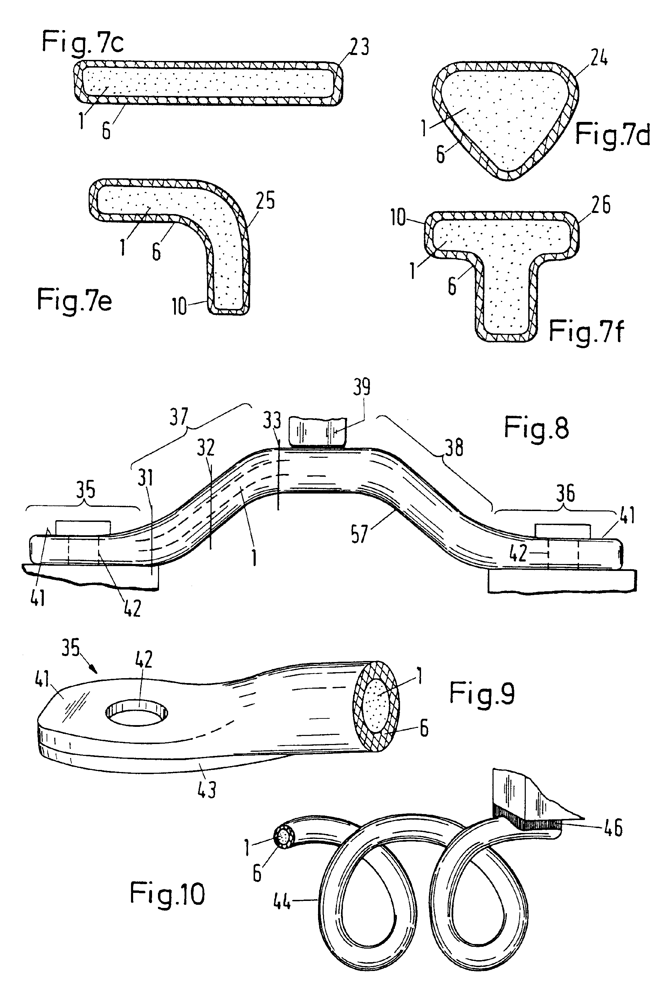

In Fig. 2 ist der Faserwinkel W des Mantelgeflechts zur Längsachse 13 von hier z.B. ca. 45° gezeigt. Dank dieser Faseranordnung und der thermoplastischen Matrix können die Profilstangen für verschiedenste Anwendungen auf einfache Art thermoplastisch verformt und gebogen werden. Dabei wird nur die Matrix verformt, während die Länge der hochfesten Fasern notwendigerweise konstant bleibt. Nur durch die Anordnung der Fasern in der Matrix bzw. deren Aenderung werden Formänderungen ermöglicht. Eine Verformung z.B. von einem kreisförmigen Querschnitt mit Umfang U1 zu elliptischer Form mit grösserem Umfang U2 in Fig. 3 kann bei gleichbleibender Querschnittsfläche F dadurch erfolgen, dass der Faserwinkel W entsprechend ändert, also W2 grösser wird als W1. Mittels einer leichten Torsion 27 des UD-Kerns um die Längsachse 13 kann auch hier ein Längenausgleich bei thermoplastischem Verbiegen der Profilstange ermöglicht werden (Fig. 2, 5). Bei einer Doppelbiegung, bei der die Längsachse 13 vor und nach der Biegung parallel ist, kann auch ohne tordierten Kern 1 ein Längenausgleich der Kernfasern erfolgen, wie dies z.B. in Fig. 8 durch die Querschnittebenen 31, 32, 33 mit gleicher Faserlänge dargestellt ist.

Fig. 4 zeigt eine Profilstange mit mehreren übereinanderliegenden Mantelgeflechtschichten 6, 7, 8. Dabei können die einzelnen Mantelschichten unterschiedliche Faserwinkel W, z.B. zwischen 30 und 60° liegend, aufweisen, um damit gewünschte Torsionsfestigkeiten und Biegeeigenschaften zu optimieren.

In Fig. 5 sind zwei Mantelgeflechte 6 und 7 mit nach aussen zunehmendem Faserwinkel W dargestellt. Der Faserwinkel W3 von z.B. 50° ist grösser als W4 mit z.B. 40°. Im Bereich der Biegung 15 erleichtert dies die Kompensation der unterschiedlichen Längen von äusserem und innerem Bogen. Der Längenausgleich im UD-Kern 1 wird hier durch eine leichte Torsion 27 der UD-Fasern erreicht.

Fig. 6 zeigt zusätzliche weitere UD-Mantelschichten 2 und 3 zwischen den äusseren Mantelgeflechten 6, 7, 8, welche auch leicht tordiert sein können. Der Anteil der UD-Längsfasern, die Anzahl, Anordnung und Stärke der verschiedenen Schichten werden entsprechend dem gewünschten Anforderungsprofil kombiniert. Mit UD-Längsfasern werden hohe Zug- und Druckfestigkeiten erzielt, Mantelgeflechte mit optimierten Faserwinkeln ergeben hohe Torsions- und Schubfestigkeiten.

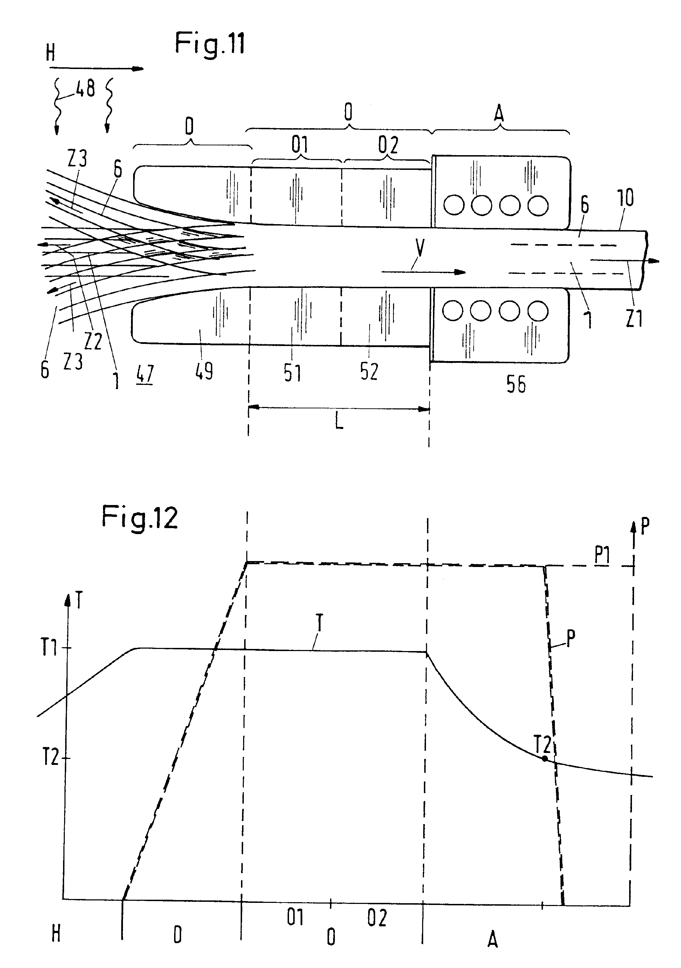

Fig. 7 a bis f zeigen verschiedene mögliche Querschnittformen der erfindungsgemässen Profilstangen: Mit abgeflachter Ovalform 21, abgerundeten Dreieck 24, Rechteck 23 und Vieleck 22 sowie auch mit konkaven Querschnitten wie L- und T-Formen 25 und 26. Dabei können solche Profile in einem Arbeitsgang kontinuierlich hergestellt werden, z.B. zuerst Formung in ein flaches Rechteck 23 und unmittelbar anschliessend Umformung in eine L-Form 25 oder zuerst in eine Dreieckform 24 übergehend in eine T-Form 26, was in den beiden Teilbereichen 51, 52 von Fig. 11, bzw. O1, O2 von Fig. 12 ausgeführt wird.

Aus diesen Profilstangen 10 als Meterware können auf denkbar einfachste Art Profilstücke verschiedenster Formen hergestellt werden. Durch einfaches Zuschneiden, Biegen, Umformen und Verbinden können beliebige Bauelemente wie Hebel, Federn, Zugstäbe etc. erzeugt werden. Dies ist weder mit hochfesten Metallprofilen noch mit bisherigen Duroplastverbundprofilen möglich.

Die Fig. 8 bis 10 zeigen Beispiele solcher Profilstücke. Ein Biegefederteil 57 besteht aus zwei Doppelbogen 37, 38, welche je durch thermoplastische Verformung des ganzen Doppelbogens aus einem Rundprofil mit nichttordiertem UD-Kern 1 erzeugt wurden. Der Längenausgleich im Kern 1 erfolgt dabei in der thermoplastischen Matrix, wobei 31, 32, 33 Querschnittebenen gleicher Faserlänge darstellen. In den Teilbereichen 35, 36 ist eine Abflachung 41 mit eingeformtem Auge 42 thermoplastisch erzeugt. Hier ist das Profilstück 57 an eine Halterung angeschraubt und in der Mitte wird eine Auflage 39 abgestützt.

Fig. 9 zeigt ein Verbindungsende mit Abflachung 41, Auge 42 und einer zusätzlichen thermoplastischen Verstärkung 43 aus Profilmaterial. Eine Feder 44 in Fig. 10 ist an eine Halterung angeschweisst 46.

Fig. 11 zeigt eine Pultrusionseinrichtung 47 zur Herstellung erfindungsgemässer Profilstangen 10, welche durch eine Zugkraft Z1 mit der Vorschubgeschwindigkeit V aus der Einrichtung 47 herausgezogen werden. Am Eingang werden der UD-Kern 1 und das Mantelgeflecht 6 je unter den Zugkräften Z2 bzw. Z3 stehend zugeführt. Durch eine Heizquelle 48 wird dabei die notwendige Temperatur T1 erzeugt. Im Einlaufbereich 49 wird der notwendige Druck P1 aufgebaut. Im Form- und Konsolidierbereich O erfolgt die Umformung und Konsolidierung der Profilstange, welche anschliessend im Kühlbereich A, immer noch unter Druck P1, auf eine Temperatur T2 abgekühlt wird, bei welcher keine weitere plastische Verformung mehr auftritt.

Das erfindungsgemässe Verfahren wird weiter erläutert anhand der, der Pultrusionseinrichtung 47 entsprechenden Temperatur und Druckverläufe von Fig. 12. Im Aufheizbereich H wird das Ausgangsmaterial auf die notwendige Umformtemperatur T1 gebracht. Der Druckaufbau auf P1 erfolgt im Bereich D, gefolgt vom Umformbereich O, O1, O2. Im anschliessenden Abkühlbereich A wird noch unter Druck P1 auf die Festtemperatur T2 gekühlt. Anschliessend erfolgt Druckabfall und weitere Auskühlung der fertigen Profilstange 10. Die Bereiche H, D, O1, O2, A von Fig. 12 entsprechen den Vorrichtungsteilen 48, 49, 51, 52, 56 in Fig. 11. Für ein gegebenes Ausgangsmaterial mit Matrix, Fasern, Faseranordnung und eine gewünschte Profilform mit ausreichender Umformstrecke L werden die Parameter Aufheizrate H, Zugkräfte Z1, Z2, Z3 und Abkühlrate so eingestellt, dass eine optimale Vorschubgeschwindigkeit V mit dem notwendigen Verlauf von T und P nach Fig. 12 erreicht wird. Dies hängt auch von der Art des Ausgangsmaterials ab. So können oberflächenbehandelte Fasern als UD-Rovings oder Faserflechtschläuche vermischt mit Thermoplastfäden, gemischte Fasern (hybrid yarn), Rovings in Thermoplastschläuchen oder auch vorimprägnierte Rovings eingesetzt werden. Nichtimprägnierte Fasern erfodern dabei höhere Drücke P1 als Prepreg-Materialien.

## Patentansprüche

1. Profilstück, hergestellt aus einer Profilstange aus kompaktem Verbundwerkstoff, welcher aus hochfesten technischen Endlosfasern in einer thermoplastischen Matrix besteht, dadurch gekennzeichnet, dass das Profilstück einen inneren Kern (1) mit unidirektionalen Fasern und mindestens einen den Kern umhüllenden Mantel (6) aus einem geflochtenen Faserschlauch aufweist und dass es mindestens in einem Teilbereich thermoplastisch umgeformt ist.

2. Profilstück nach Anspruch 1, gekennzeichnet durch ein thermoplastisches Polymer als Matrix.

3. Profilstück nach Anspruch 2, dadurch gekennzeichnet, dass als thermoplastisches Polymer PEEK, PPS, PES, PEI, PA, PC oder PS vorgesehen ist.

4. Profilstück nach Anspruch 1, dadurch gekennzeichnet, dass modifizierte Duromere, z.B. modifizierte Polyester als thermoplastische Matrix vorgesehen sind.

5. Profilstück nach Anspruch 1, dadurch gekennzeichnet, dass Glas, Aluminium oder Titan als Matrix vorgesehen ist.

6. Profilstück nach Anspruch 1, dadurch gekennzeichnet, dass hochfeste Verstärkungsfasern aus Kohle, Aramid, Glas oder Bor vorgesehen sind.

7. Profilstück nach Anspruch 3, dadurch gekennzeichnet, dass PEEK oder PPS mit mindestens 45 Volumen Prozent an Verstärkungsfasern aus Kohle, Aramid oder Glas vorgesehen sind.

8. Profilstück nach Anspruch 1, dadurch gekennzeichnet, dass die Querschnittsfläche der Ummantelung (6) mindestens 15 % der Querschnittsfläche des UD-Kerns (1) beträgt.

9. Profilstück nach Anspruch 1, dadurch gekennzeichnet, dass mehrere übereinanderliegende, umhüllende Mantelgeflechte (6, 7, 8) vorgesehen sind.

10. Profilstück nach Anspruch 9, dadurch gekennzeichnet, dass die Ummantelungsschichten unterschiedliche Faserwinkel W aufweisen.

11. Profilstück nach Anspruch 10, dadurch gekennzeichnet, dass die Faserwinkel der Ummantelungsschichten nach aussen zunehmen.

12. Profilstück nach Anspruch 9, dadurch gekennzeichnet, dass zwischen den Mantelschichten weitere unidirektionale Gelege (2, 3) vorgesehen sind.

13. Profilstück nach Anspruch 1, dadurch gekennzeichnet, dass der unidirektionale Kern (1) tordiert ist.

14. Profilstück nach Anspruch 1, dadurch gekennzeichnet, dass deren Querschnitt rund, abgeflacht (23) oder in abgerundeter Vieleckform (24, 26) ausgebildet ist.

15. Profilstück nach Anspruch 1, dadurch gekennzeichnet, dass es in einem Teilbereich (35, 37) abgeflacht oder gebogen ist.

16. Profilstück nach Anspruch 1, dadurch gekennzeichnet, dass es ein eingeformtes Auge (42) aufweist.

17. Profilstück nach Anspruch 1, dadurch gekennzeichnet, dass es mit einem weiteren Profilstück anderer Form oder mit einem Fremdteil durch Verschweissung (46) der thermoplastischen Matrix verbunden ist.

18. Verfahren zur Herstellung von Profilstangen für Profilstücke nach Anspruch 1, dadurch gekennzeichnet, dass der unidirektionale Kern (1) und die Ummantelungsgeflechte (6) zuerst aufgeheizt und dann zusammen in einem Arbeitsgang in einer Pultrusionseinrichtung (47) kontinuierlich gebildet werden, wobei sie unter Druck und teilweiser Abkühlung kompakt konsolidiert und in die vorgegebene Profilform gepresst werden, wobei Vorheizung, Vorschub, Zugkräfte, Abkühlrate und Formgebung in der Pultrusionseinrichtung so auf Matrix und Fasern abgestimmt sind, dass die Konsolidierung unter optimalem Druck erfolgt.

## Claims

1. A section member made from a rod section of compact composite material consisting of high-strength industrial endless fibres in a thermoplastic matrix, characterised in that the section member comprises an inner core (1) with unidirectional fibres and at least one jacket (6) enveloping the core and comprising a braided fibre tube and in that it is thermoformed at least in one partial zone.

2. A section member according to claim 1, characterised in that the matrix is a thermoplastic polymer.

3. A section member according to claim 2, characterised in that the thermoplastic polymer is PEEK, PPS, PES, PEI, PA, PC or PS.

4. A section member according to claim 1, characterised in that modified duromers, e.g. modified polyesters, are provided as the thermoplastic matrix.

5. A section member according to claim 1, characterised in that the matrix is of glass, aluminium or titanium.

6. A section member according to claim 1, characterised in that high-strength reinforcing fibres of carbon, aramid, glass or boron are provided.

7. A section member according to claim 3, characterised in that PEEK or PPS containing at least 45% by volume of carbon or aramid or glass reinforcing fibres is provided.

8. A section member according to claim 1, characterised in that the cross-sectional area of the jacket (6) is at least 15% of the cross-sectional area of the unidirectional core (1).

9. A section member according to claim 1, characterised in that a number of superposed enveloping braided jackets (6, 7, 8) are provided.

10. A section member according to claim 9, characterised in that the enveloping layers have different fibre angles (W).

11. A section member according to claim 10, characterised in that the fibre angles of the enveloping layers increase outwardly.

12. A section member according to claim 9, characterised in that additional unidirectional layers (2, 3) are provided between the jacket layers.

13. A section member according to claim 1, characterised in that the unidirectional core (1) is twisted.

14. A section member according to claim 1, characterised in that its cross-section is round or flattened (23) or a rounded polygonal shape (24, 26).

15. A section member according to claim 1, characterised in that it is flattened or bent in a partial zone (35, 37).

16. A section member according to claim 1, characterised in that it has an integrally formed eyelet (42).

17. A section member according to claim 1, characterised in that it is joined to another section member of different shape or to an independent part by welding (46) the thermoplastic matrix.

18. A method of manufacturing rod sections for section members according to claim 1, characterised in that the unidirectional core (1) and the braided jacket (6) are first heated and then continuously formed together in a pultrusion device (47) in a single operation, during which they are compacted and consolidated under pressure and with partial cooling and moulded into the required cross-sectional shape, the preheating, rate of feed, tensile forces, cooling rate and shaping in the pultrusion device being so adapted to the matrix and fibres that consolidation occurs at optimum pressure.

## Revendications

1. Pièce profilée réalisée à partir d'une tige profilée en matériau composite compact, qui est constitué de fibres continues techniques très résistantes dans une matrice thermoplastique, caractérisée en ce que la pièce profilée comporte un noyau (1) intérieur avec fibres unidirectionnelles et au moins une gaine (6) entourant le noyau, faite d'un tube de fibres tressées et en ce qu'elle est déformée thermoplastiquement au moins dans une zone partielle.

2. Pièce profilée selon la revendication 1, caractérisée en ce que la matrice est un polymère thermoplastique.

3. Pièce profilée selon la revendication 2, caractérisée en ce qu'il est prévu comme polymère thermoplastique PEEK, PPS, PES, PEI, PA, PC ou PS.

4. Pièce profilée selon la revendication 1, caractérisée en ce que des duromères modifiés, par exemple des polyesters modifiés, sont prévus comme matrice thermoplastique.

5. Pièce profilée selon la revendication 1, caractérisée en ce qu'il est prévu comme matrice, du verre, de l'aluminium ou du titane.

6. Pièce profilée selon la revendication 1, caractérisée en ce qu'il est prévu des fibres de renfort très résistantes en carbone, aramide, verre ou bore.

7. Pièce profilée selon la revendication 3, caractérisée en ce qu'il est prévu du PEEK ou du PPS avec au moins 45 pour cent en volume de fibres de renfort en carbone, aramide ou verre.

8. Pièce profilée selon la revendication 1, caractérisée en ce que la superficie de section transversale de la gaine (6) est au moins égale à 15 pour cent de la superficie de section transversale du noyau unidirectionnel (1).

9. Pièce profilée selon la revendication 1, caractérisée en ce qu'il est prévu plusieurs gaines d'enveloppe tressées (6, 7, 8), superposées.

10. Pièce profilée selon la revendication 9, caractérisée en ce que les couches de gainage présentent des angles des fibres W différents.

11. Pièce profilée selon la revendication 10, caractérisée en ce que les angles des fibres des couches de gainage augmentent vers l'extérieur.

12. Pièce profilée selon la revendication 9, caractérisée en ce qu'il est prévu d'autres couches unidirectionnelles (2, 3) entre les couches des gaines.

13. Pièce profilée selon la revendication 1, caractérisée en ce que le noyau unidirectionnel (1) est torsadé.

14. Pièce profilée selon la revendication 1, caractérisée en ce que sa section transversale est ronde, aplatie (23) ou de forme polygonale arrondie (24, 26).

15. Pièce profilée selon la revendication 1, caractérisée en ce qu'elle est aplatie ou courbée dans une zone partielle (35, 37).

16. Pièce profilée selon la revendication 1, caractérisée en ce qu'elle présente un oeillet (42) formé par moulage.

17. Pièce profilée selon la revendication 1, caractérisée en ce qu'elle est reliée avec une autre pièce profilée d'une autre forme ou avec une pièce extérieure par soudage (46) de la matrice thermoplastique.

18. Procédé de fabrication de tiges profilées pour pièces profilées selon la revendication 1, caractérisé en ce que le noyau (1) unidirectionnel et les tressages de gainage (6) sont d'abord chauffés puis formés en continu ensemble en une seule phase de travail, dans un dispositif de pultrusion (47), où ils sont consolidés de manière compacte sous pression et refroidissement partiel et pressés dans la forme profilée prédéterminée, le préchauffage, l'avance, les forces de traction, la vitesse de refroidissement et le formage étant adaptés dans le dispositif de pultrusion à la matrice et aux fibres de manière que la consolidation s'effectue sous une pression optimale.
